# EUROPÄISCHE PATENTSCHRIFT

(11) **EP 1 422 155 B1**
(45) Veröffentlichungstag und Bekanntmachung des Hinweises auf die Patenterteilung: **28.02.2007**
(21) Anmeldenummer: 03027091.2
(22) Anmeldetag: 25.11.2003
(51) Int. Cl.: B65D 30/08, B65D 5/62

(54) **Transportbehälter**
Transport container
Boîtier de transport

(30) Priorität: 25.11.2002 DE 10255071
(43) Veröffentlichungstag der Anmeldung: 26.05.2004
(73) Patentinhaber: Polymer-Synthese-Werk, 47495 Rheinberg (DE)
(72) Erfinder: Klaus, Axel Uwe, 47495 Rheinberg (DE)
(74) Vertreter: Demski, Siegfried

(56) Entgegenhaltungen:
- CH-A- 186 411
- DE-U- 8 223 789
- DE-U- 8 521 218
- FR-A- 1 520 240
- FR-A- 2 352 715
- GB-A- 1 193 653

## Beschreibung

Die Erfindung betrifft einen Transportbehälter, insbesondere für feuchte oder durchnässende Stoffe, bestehend aus einem kastenförmigen Behälter, welcher durch Faltung flach zusammenlegbar ist und zumindest teilweise aus Pappe oder Karton besteht, wobei sich die Faltung in den Bodenbereich hinein erstreckt und im gefalteten Zustand Bodenteile aneinander liegen.

Als Beispiel siehe das Dokument CH-A-186 411.

Zum Transport von durchnässenden Stoffen sind Behälter aus Pappe oder Karton bekannt, wobei vorzugsweise hochwertige, imprägnierte Papier- und Pappwaren verwendet werden. Hierdurch wird sicher gestellt, dass feuchte oder nässende Bestandteile der Stoffe den Behälter nicht aufweichen und nach außen gelangen können. Bei den Stoffen kann es sich um fett- oder ölartige Substanzen handeln oder um Stoffe, die feucht sind oder, die infolge Erwärmung Feuchtigkeit abgeben. Aus den US-Patenten 46 20 479 und 47 11 390 sind beispielsweise flach zusammenklappbare kastenförmige Behälter aus Pappe oder Karton bekannt, die vorzugsweise als Müllbehälter für Flugzeuge verwendet werden. In den Müllbehältern werden Restflüssigkeiten, beispielsweise aus Trinkgefäßen oder Restbestandteile von serviertem Essen, sicher bis zur Entsorgung aufbewahrt. Die Faltungen der Müllbehälter sind derart ausgebildet, dass diese durch zusammenklappen an den Falten raumsparend aufbewahrt werden können. Im Bedarfsfall können diese auseinander geklappt ihrem Einsatzzweck zugeführt werden. Es hat sich aber herausgestellt, dass infolge der Stoßnähte beziehungsweise in den Faltecken keine verlässliche Dichtigkeit erreicht werden kann. Dies trifft insbesondere für den Fall zu, dass ein faltbarer Behälter mehrfach auf und zu gefaltet wird. Die vorhandene aufzunehmende Feuchtigkeit kann hierbei durch undichte Faltnähte oder im Eckbereich durch mechanisch beanspruchte Faltkanten aus dem Behälter auslaufen, sodass eine Verschmutzung benachbarter Behälter beziehungsweise anderer Einrichtungen nicht gänzlich ausgeschlossen werden kann.

Weitere Beispiele für wasserdichte Transportbehälter werden in der DE 89 11 558 U1 und in der JP 20 01 348 029 AA sowie in der JP 11 124 145 AA offenbart. Die Umhüllung für einen flach zusammenklappbaren kastenförmigen Müllbehälter nach der DE 89 11 558 U1 hat aber den Nachteil, dass diese Umhüllung nicht selbstständig stehen kann oder, dass der aufgefaltete Müllbeutel keinen sicheren Stand aufweist. Der Transportbehälter für nässende Stoffe gemäß JP 20 01 348 029 AA offenbart einen Karton, in welchem ein Behälter aus Plastik eingesetzt ist. Derart gestaltete Müllbehälter haben jedoch den Nachteil, dass diese nicht in Flugzeugmüllkompaktoren eingesetzt werden können, da ein Stempel, welcher in den Karton zur Müllkompaktierung hinein fährt, auch den eingesetzten Plastikbehälter kompaktieren würde, der dadurch so seine Funktion verliert. Auch der Seitenfaltenbeutel nach der JP 11 124 145 AA mit einem von innen eingesetzten Kunstharzboden eignet sich nicht zur Verwendung in Flugzeugmüllkompaktoren, da der Seitenfaltenbeutel bedingt durch seine Faltung der Seitenwände keinen stabilen Stand aufweist und dazu neigt, die Seitenwände nach innen zu wölben, wodurch der Beutel dem Kompaktorstempel im Wege steht und durch diesen zerstört wird. Des Weiteren neigt ein Seitenfaltenbeutel zu Undichtigkeiten an der unteren Naht, welche dadurch entstehen, dass eine unterschiedliche Anzahl von Lagen entlang der Schweißnaht miteinander verschweißt werden und dadurch Kanülen an den Stellen entstehen, wo eine ungleiche Anzahl Beutelwandlagen benachbart aneinander liegen. In den oben benannten Müllkompaktoren wird Müll mit extrem hohen Drücken durch einen Stempel verdichtet. Die Müllverdichtung in Müllkompaktoren, wie sie in Flugzeugen eingesetzt werden, ist nicht vergleichbar mit einer Müllverdichtungsanlage, welche aus dem Gebrauch in privaten Haushalten bekannt ist. Im Gegensatz zu letzteren Müllkompaktoren kompaktiert ein Flugzeugmüllkompaktor mit einer wesentlich höheren Verdichtungsrate. Dies hat zur Folge, dass die Müllbehälter äußerst präzise in den Kompaktierungsraum passen müssen, wobei der Müllbehälter so gestaltet sein muss, dass der Stempel, welcher sehr präzise die Innenmaße des verwendeten Müllbehälters ausfüllt, nicht auch den Müllbehälter selbst erfasst und dabei kompaktiert und zerstört.

Der Erfindung liegt die Aufgabe zugrunde, einen Transportbehälter aufzuzeigen, der zum Warentransport aber auch zum Mülltransport verwendet werden kann und trotz einer vorgesehenen Faltung vorhandene Flüssigkeiten sicher aufnimmt und eine einfache Handhabung gewährleistet sowie ein Verfahren zur Herstellung des Transportbehälters aufzuzeigen.

Eine weitere Aufgabe der Erfindung ist, dass der erfindungsgemäße Transportbehälter insbesondere für feuchte oder nässende Stoffe in Müllkompaktoren, wie sie in Flugzeugen eingesetzt werden, zum Einsatz kommen soll, ohne dass der Transportbehälter dem Müllkompaktorstempel eine Angriffsfläche bietet und durch diesen zerstört wird.

Eine weitere Aufgabe der Erfindung ist es, einen Transportbehälter zur Verwendung in Flugzeugmüllkompaktoren zur Verfügung zu stellen, welcher bei Müllverdichtung nicht dazu neigt, Undichtigkeiten in Faltungen aufzuweisen, durch welche bei der Verdichtung Flüssigkeiten austreten können.

Erfindungsgemäß ist zur Lösung der Aufgabe vorgesehen, dass der Behälter eine faltbare Kunststoffschale als Boden aufweist, welche außen an den Seitenwänden des Behälters befestigt ist. Vorteilhafte Ausgestaltungen ergeben sich aus den Unteransprüchen.

Durch den erfindungsgemäßen Transportbehälter wird erreicht, dass eine beliebige Bodenfaltung für den Behälter verwendet werden kann, wobei auch Kasten- und Kreuzböden nach DIN 26 591 verwendet werden können, welche einfach herzustellen sind, aber ohne erfindungsgemäße Abdichtung problematisch für den Transport für Flüssigkeiten sind. Dieses führt einerseits dazu, dass für die äußere Kunststoffschale auf bekannte Flachsachfaltungen mit nach außen gefalteten Seitenwänden zurückgegriffen werden kann, was einerseits zu niedrigen Produktionskosten führt und andererseits, dass beliebige Behälterfaltungen mit beliebigen Bodenausprägungen verwendet werden können, die den aufgestellten Transportbehälter dazu führen, sich nicht nach innen zurück zu falten, sondern sich an die Innenwände des Kompaktors zu schmiegen. Des Weiteren ist es hierdurch möglich, eine einfache Mülltrennung vorzunehmen, in dem der äußere Kunststoffboden leicht von dem Behälter entfernt werden kann.

Ein weiterer Vorteil des erfindungsgemäßen Transportbehälters, insbesondere zur Verwendung in Flugzeugmüllkompaktoren, ist es, dass die äußere Kunststoffschale werkseitig so auf den Behälter aufgebracht ist, dass dieser bei Verwendung in einem Flugzeugmüllkompaktor nicht dazu neigt, dass aufgrund einer Übergröße des äußeren Kunststoffbehälters sich der Transportbehälter nach innen ausbeult oder verwirft und dadurch von dem Stempel des Müllkompaktors erfasst und kompaktiert wird.

In besonders vorteilhafter Weise wird der Behälter so gefaltet, dass die Seitenwände des gesamten Transportbehälters eine Faltung nach außen aufweisen und der Boden des Behälters eine Faltung nach innen aufweist. Der hierdurch entstandene Transportbehälter in gefalteter Form weist durch die Faltung eine Neigung auf, sich im aufgestellten Zustand mit den Seitenwänden nach außen zu wölben. Bei einem Gebrauch in einem Flugzeugmüllkompaktor führt dies dazu, dass sich die Außenwände eng an die Seitenwände des Flugzeugmüllkompaktors schmiegen und so nicht von dem kompaktierenden Stempel erfasst, kompaktiert und zerstört werden.

Ferner kann entsprechend der zu erwartenden Flüssigkeitsmenge die Kunststoffschale in soweit an den äußeren Wänden hochgezogen werden, dass ein größerer Auffangbehälter entsteht. Vorzugsweise ist hierbei vorgesehen, dass die Kunststoffschale im Bereich der Seitenwände cirka 20 bis 30 cm oder auch bis zu mehr als 50% der Transportbehälterhöhe umgreifend hoch gezogen ist.

Der Karton, aus dem der Behälter bestehen kann, ist vorzugsweise veredelt oder gegen Feuchtigkeit imprägniert. Ebenfalls ist es möglich, dass der Karton mit einer Folie kaschiert ist, wobei die Folie den Karton gegen Feuchtigkeit schützt und dazu verwendet werden kann, eine Kunststoffschale auf dem Karton zu befestigen.

Bevorzugt erfolgt die Verbindung zwischen der Kunststoffschale und den Seitenwänden durch eine Klebefolie oder alternativ durch miteinander verschweißbare Folien, die auf der Innenseite der Kunststoffschale und auf der Außenseite des Behälters aufgebracht, vorzugsweise kaschiert, sind. Insofern kann durch Wärmeeinwirkung eine Verbindung zwischen der Kunststoffschale und den Seitenwänden hergestellt werden.

Zur besseren Handhabung der Kunststoffschale bei der Herstellung des Transportbehälters und zum mechanischen Schutz der Kunststoffschalenfalten kann die Kunststoffschale durch zusätzliche Bodenteile aus Pappe oder Karton verstärkt sein.

Optional kann der Transportbehälter Halteschlaufen aufweisen, welche auf die Außenwand des Behälters gefaltet sind und zur Verwendung aufgestellt werden. Des Weiteren kann eine Banderole um den Transportbehälter gelegt sein, um den Transportbehälter waagerecht aus dem Müllkompaktor ziehen zu können.

In besonderer Ausführungsform des erfindungsgemäßen Transportbehälters besteht die Kunststoffschale aus eine Doppelfolie, welche eine Lagenfolge aufweist, in der eine innere Klebefolie und eine äußere Polyethylenfolie vorliegt oder es liegt eine Lagenfolge in der Doppelfolie vor, in der die innere Folienlage aus niedrigtemperaturschmelzendem Polyethylen und die äußere Folienlage aus hochtemperaturschmelzendem Polyethylen besteht. Während eines Vakuumtiefziehverfahrens, bei welchem die Doppelfolie über den Behälter gezogen wird, gelangt die Doppelfolie auf die Seitenwände und den Boden des Behälters und ist durch Verschweißung, Kaschierung oder Verklebung mit dem Behälter verbunden.

In besonderer Ausgestaltung der Erfindung ist vorgesehen, dass die Kunststoffschale im Vakuumtiefziehverfahren von außen um den aufgeklappten Behälter gelegt und mit diesem durch eine Klebefolie verbunden ist. Durch das Vakuumtiefziehverfahren wird eine einfache kostengünstige Möglichkeit aufgezeigt, um einen vorhandenen Bodenbereich eines Behälters zusätzlich mit einer Kunststofffolie nachträglich zu überziehen, die einen Schutz vor Feuchtigkeitsaustritt oder durchnässende Materialien bietet.

Zur Lösung der Verfahrensaufgabe ist hierzu erfindungsgemäß vorgesehen, dass der Behälter anstelle eines Formstücks in eine Aufnahmeeinrichtung einer Vakuumtiefziehvorrichtung eingespannt wird und der Bodenbereich sowie die Seitenwände zumindest teilweise mit einer Folie umhüllt werden, die durch Erzeugung eines Vakuums unterhalb des Behälters zur Anlage an den Behälter gelangen.

Das Vakuumtiefziehverfahren ermöglicht in einfacher Weise die Anbringung eines Kunststoffbodens mit größtmöglicher Sicherheit gegenüber austretender Feuchtigkeit, wobei sich die Folie eng an den Behälter anlegen lässt. Zu diesem Zweck können aufgefaltete Behälter mit oder ohne Bodenbereich in einer entsprechenden Vorrichtung für das Vakuumtiefziehverfahren anstelle des sonst üblicherweise verwendeten Formstücks eingespannt und mit der Folie zusätzlich beschichtet werden. Derartige Vorrichtungen sind beispielsweise bekannt, um in einem Vakuumtiefziehverfahren bestimmte Formen herzustellen. Zu diesem Zweck wird beispielsweise über ein vorhandenes Formstück die Folie im Vakuumtiefziehverfahren gezogen und seitlich beschnitten. Anstelle des Formstücks wird nunmehr der aufgefaltete Karton verwendet, um den die Folie ebenfalls im Vakuumtiefziehverfahren herum gezogen wird, sodass die Folie gleichmäßig und äußerst dicht den vorhandenen Karton umschließt. Zur Befestigung der Folie kann ebenfalls eine Klebefolie verwendet werden oder aber eine Doppelfolie, die durch Wärmeeinwirkung mit einer weiteren Folie des Behälters verschweißt wird. In beiden Fällen erfolgt eine absolut sichere Befestigung der Folie auf dem Behälter, die gegenüber der bisher bekannten Ausführung eine hohe Dichtigkeit auch im Falle einer Faltung gewährleistet. Der Behälter bleibt aufgrund der Elastizität der verwendeten Folien nach wie vor zusammenfaltbar, weil diese sich an die zusammengeklappte beziehungsweise aufgeklappte Form des Behälters anschmiegt. Somit wird im unteren Bereich des Behälters ein dicht schließender Boden ausgebildet und feuchte Materialien, insbesondere wässrige Lösungen werden aufgenommen. Vorzugsweise ist dieser Behälter zum Einsatz als Müllbehälter, insbesondere in Flugzeugmüllkompaktoren, vorgesehen. Alternativ besteht die Möglichkeit, dass der Behälter zum Transport von durchnässenden Waren verwendet wird, wobei gegebenenfalls die Höhe des seitlichen Überstands so bemessen werden kann, dass mehr als die halbe Behälterhöhe mit der Schutzfolie versehen ist. Nach dem Befüllen des Behälters kann auch der obere Bereich des Behälters ebenso luftdicht und flüssigkeitsdicht verschlossen werden, sodass ein allseitig geschlossener Behälter entsteht, der die aufgenommenen Materialien sicher umschließt.

Alternativ kann der Transportbehälter, dadurch hergestellt werden, in dem über den gefalteten Behälter eine Kunststoffschale gestülpt wird, wobei Befestigungsmittel wie Klebepunkte oder selbstklebende Folie vorhanden ist, die den Behälter beim Entfalten in der Kunststoffschale mit dieser verbinden.

Entweder kann die Folie auf einer Seite selbstklebend ausgebildet sein oder aber es wird eine Doppelfolie aus Polyethylen verwendet, die während des Herstellungsverfahrens an die Seitenwände und/oder den Bodenbereich gelangt und somit den Behälter dicht umschließt. Soweit auf eine Klebefolie verzichtet wird, kann eine Doppelfolie verwendet werden, die auf ihrer Innenseite einen niedrigeren Schmelzpunkt als auf der Außenseite aufweist, sodass durch Wärmeeinwirkung eine Verschweißung mit einer bereits auf dem Behälter befindlichen Folie mit niedrigem Schmelzpunkt (LDPE) erfolgen kann. Die außen liegende Polyethylenfolienlage weist demgegenüber einen höheren Schmelzpunkt (MDPE oder HDPE) auf, sodass die äußere Folienlage durch eine Verschweißung der inneren Folienlage mit der auf dem Behälter befindlichen Folie nicht beschädigt wird.

Vorzugsweise wird der Transportbehälter im Herstellungsverfahren so gefaltet, dass der Boden nach innen weist und die Seitenwände bei der Faltung nach außen weisen. Durch diese Faltung wird erreicht, dass der im Einsatz befindliche Transportbehälter dazu neigt, die Seitenwände gegen die Innenwände des Müllkompaktors zu schmiegen und der Boden wird durch die Spannung der Seitenwände nach unten gedrückt, obwohl der Boden eine Innenfaltung aufweist, die entgegen ihrer Eigenspannung durch die Seitenwände gespannt wird.

Die erfindungsgemäße Lösung mit einem faltbaren Kunststoffboden gewährleistet somit eine ausreichende Dichtigkeit auch im Bereich der Stoßnähte beziehungsweise in den Faltecken des Behälters, sodass Restflüssigkeiten oder durchnässende Materialien sicher aufgenommen und transportiert werden können. Durch die flächige Anlage an den Seitenteilen oder gegebenenfalls an den Bodenbereich ist darüber hinaus sicher gestellt, dass die Verbindung zwischen dem Kunststoffboden und den Behälterseitenwänden auch einer extremen Beanspruchung standhält.

Die Erfindung wird im Weiteren anhand eines Ausführungsbeispiels näher erläutert.

Es zeigt
- Figur 1: eine perspektivische Seitenansicht eines nicht vollständig entfalteten Transportbehälters,
- Figur 2: eine Seitenansicht eines gefalteten Transportbehälters mit einem erfindungsgemäßen faltbaren äußeren Kunststoffboden und
- Figur 3: eine Vorrichtung zur Herstellung des Behälters mit Kunststoffschale durch ein Vakuumtiefziehverfahren.

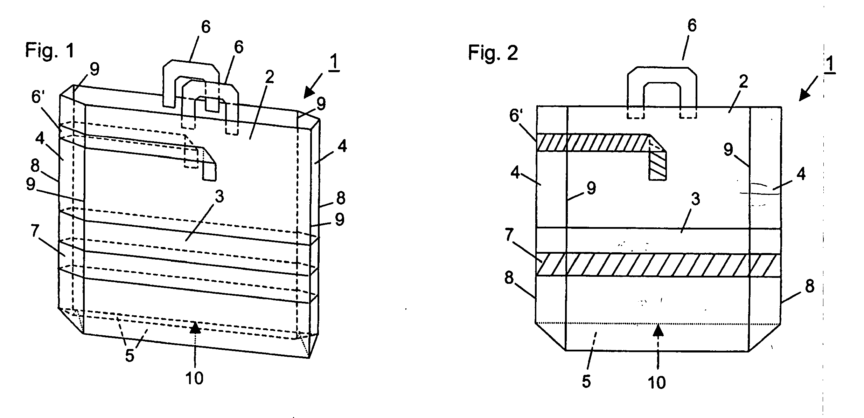

In Figur 1 ist in perspektivischer Weise ein erfindungsgemäßer nicht vollständig entfalteter Transportbehälter 1 abgebildet, welcher aus einem Behälter 2 aus feuchtigkeitsfestem Karton und einer Kunststoffschale 3 besteht. Die Kunststoffschale 3 befindet sich um den äußeren Teil des Behälters 2. Im gefalteten Zustand weisen die beiden Seitenwände 4 nach außen und der Boden 5 weist nach innen. Die Seitenwände 4 neigen durch die Faltung an den Faltnähten 8, 9, 10 dazu, sich nach außen zu wölben, wobei diese sich bei Verwendung im Müllkompaktor gegen die Innenwände des Müllkompaktors schmiegen. Wahlweise kann der Transportbehälter 1 Halteschlaufen 6, 6' aufweisen, um den Transportbehälter 1 bequem tragen zu können. Die Halteschlaufe 6' bleibt bis zur Verwendung um den Behälter 2 gespannt und wird zum Tragen nach oben gestülpt. Die wahlweise vorhandenen Halteschlaufen 6 hingegen können nach außen auf die Außenwand des Behälters 2 gefaltet sein und werden zur Verwendung aufgestellt. Ein weiteres Element, welches wahlweise an den Transportbehälter 1 angebracht werden kann, ist eine Banderole 7, die dazu verwendet werden kann, den Transportbehälter 1 waagerecht aus einem Flugzeugmülkompaktor herauszuziehen, in dem in die Banderole 7 eingegriffen und daran gezogen wird.

In Figur 2 ist der gleiche Transportbehälter wie in Figur 1 abgebildet. In dieser Seitenansicht ist der erfindungsgemäße Transportbehälter im gefalteten Zustand abgebildet, wobei die Seitenwände 4 nach außen ragen und der Boden 5 durch eine Faltung in der Mitte nach innen ragt. Die Kunststoffschale 3 ist mit einem Befestigungsmittel auf den Behälter 2 aufgebracht beispielsweise durch eine selbstklebende Folie oder durch ein verschweißen der Folie mit dem folienkarschierten Karton, aus dem der Behälter 2 bestehen kann. Je nach Höhe des zu erwartenden Flüssigkeitsfüllstands kann die Kunststoffschale 3 den Karton nur teilweise oder vollständig umschließen. Zum Tragen des Transportbehälters 1 befinden sich am oberen Ende zwei aufgeklebte oder aufgeschweißte Halteschlaufen 6 und/oder eine ausklappbare Halteschlaufe 6' sowie eine Banderole 7 zum Herausziehen des Transportbehälters aus einem Flugzeugmüllkompaktor.

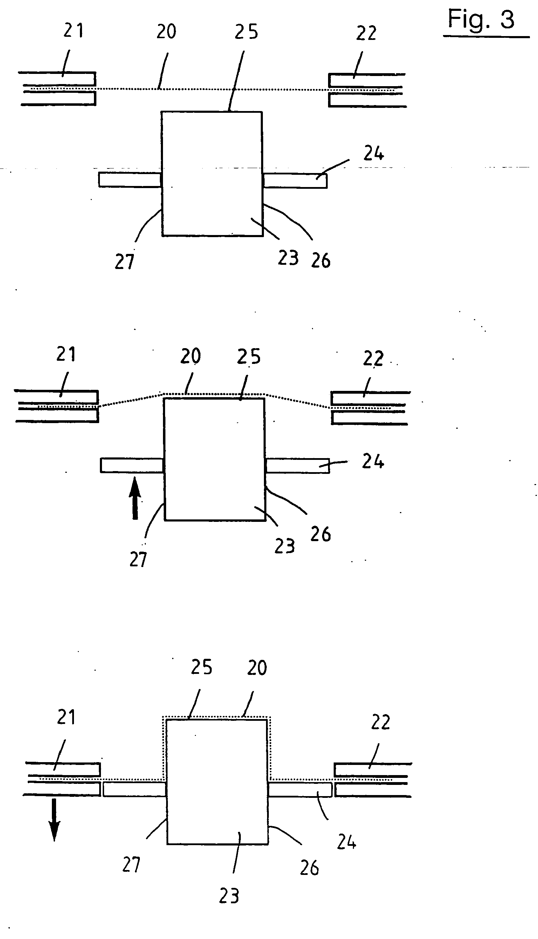

Figur 3 zeigt eine Vorrichtung zur Herstellung eines Behälters mit Kunststoffschalen durch ein Vakuumtiefziehverfahren. Die entsprechende Vorrichtung wird nur skizzenhaft dargestellt und auf die wesentlichen Komponenten beschränkt, wobei in den Teilfiguren ablaufende Arbeitsschritte dargestellt sind. In der oberen Teilfigur ist eine Folie 20 zwischen zwei Klemmbacken 21, 22 eingespannt. Ebenso ist ein vorbereiteter Transportbehälter 23 zwischen einer Aufnahmeeinrichtung 24 aufgenommen, die ebenso wie die Klemmbacken 21, 22 gegeneinander verfahrbar ausgebildet sind. In einer ersten Phase wird der Transportbehälter 23 mit der Aufnahmeeinrichtung 24 in Richtung auf die Klemmbacken 21, 22 bewegt, sodass sich die Folie 20 über die obere Fläche 25 des Transportbehälters 23 legt. In einer zweiten Phase werden die Klemmbacken 21, 22 zusammen mit der Folie 20 in Richtung auf den Transportbehälter 23 bewegt, wobei gleichzeitig durch vorhandene und nicht dargestellte Bohrungen unterhalb der Aufnahmeeinrichtung 24 und des Transportbehälters 23 ein Vakuum erzeugt wird, sodass die Folie 20 sich zusätzlich an die Seitenwände 26, 27 des Transportbehälters 23 anlegt. Die überschüssige Folie 20 ruht in Folge des erzeugten Vakuums auf der Aufnahmeeinrichtung 24 und kann nach Beendigung und Abkühlung der Folie 20 bündig abgeschnitten werden. Auf diese Weise entsteht ein Transportbehälter 23, der nach einer Drehung um 180 Grad einen flüssigkeitsdichten Boden aufweist und zur Aufnahme von durchnässenden oder feuchten Materialien vorgesehen ist. Nach einer Befüllung des Transportbehälters 23 besteht zudem die Möglichkeit, die obere Hälfte des Transportbehälters 23 in ähnlicher Weise zu verschließen. Zur Verbindung der Folie 20 mit dem Transportbehälter 23 kann diese beispielsweise eine Klebeschicht aufweisen, die auf der oberen Fläche 25 beziehungsweise Seitenwänden 26, 27 des Transportbehälters 23 haftet. Alternativ besteht die Möglichkeit, dass die Seitenwände 26, 27 und Flächen 25 bereits mit einer Klebefolie beschichtet sind oder aber eine zumindest zweischichtige Folie aufgetragen ist deren Außenseite einen niedrigen Schmelzpunkt aufweißt, während die vorgesehene Folie 20 ebenfalls als mehrschichtige Folie ausgebildet einen niedrigeren Schmelzpunkt auf der Innenseite aufweist und durch Wärmeeinwirkung mit der bereits vorhandenen Folie verschweißt werden kann.

### Bezugszeichenliste

- 1: Transportbehälter
- 2: Behälter
- 3: Kunststoffschale
- 4: Seitenwand
- 5: Boden
- 6: Halteschlaufe
- 6': Halteschlaufe
- 7: Banderole
- 8: Faltnaht
- 9: Faltnaht
- 10: Faltnaht
- 20: Folie
- 21: Klemmbacke
- 22: Klemmbacke
- 23: Transportbehälter
- 24: Aufnahmeeinrichtung
- 25: Fläche
- 26: Seitenwand
- 27: Seitenwand

## Patentansprüche

1. Transportbehälter (1, 23), insbesondere für feuchte oder durchnässende Stoffe, bestehend aus einem kastenförmigen Behälter (2), welcher durch Faltung flach zusammenlegbar ist und zumindest teilweise aus Pappe oder Karton besteht, wobei sich die Faltung in den Bodenbereich hinein erstreckt und im gefalteten Zustand Bodenteile aneinander liegen,
**dadurch gekennzeichnet,**
**dass** der Behälter (2) eine faltbare Kunststoffschale (3) als Boden (5) aufweist, welche außen an den Seitenwänden (4) des Behälters (2) befestigt ist.

2. Transportbehälter nach Anspruch 1,
**dadurch gekennzeichnet,**
**dass** die Seitenwände (4) im gefalteten Zustand nach außen weisen und der Boden (5) nach innen weist.

3. Transportbehälter nach einem der Ansprüche 1 bis 2,
**dadurch gekennzeichnet,**
**dass** die Kunststoffschale (3) bis zu mehr als 50% über die Höhe des Behälters (2) hochgezogen ist.

4. Transportbehälter nach einem der Ansprüche 1 bis 3,
**dadurch gekennzeichnet,**
**dass** die aus Pappe oder Karton bestehenden Teile des Behälters (2) imprägniert und/oder zusätzlich mit einer Folie (20) kaschiert sind.

5. Transportbehälter nach einem der Ansprüche 1 bis 4,
**dadurch gekennzeichnet,**
**dass** die Kunststoffschale (3) durch weitere Bodenteile aus Pappe oder Karton verstärkt ist.

6. Transportbehälter nach einem der Ansprüche 1 bis 5,
**dadurch gekennzeichnet,**
**dass** gefaltete Halteschlaufen (6, 6') an dem Behälter (2) angeordnet sind, oder dass eine Banderole (7) um den Transportbehälter (1, 23) gelegt ist.

7. Transportbehälter nach einem der Ansprüche 1 bis 6,
**dadurch gekennzeichnet,**
**dass** die Kunststoffschale (2) aus einer Doppelfolie besteht, welche wiederum aus einer Polyethylenfolie und einer Klebefolie besteht oder dass die Kunststoffschale (2) aus einer Doppelfolie aus zwei Polyethylenfolien mit unterschiedlichen Schmelztemperaturen besteht, die während des Vakuumtiefziehverfahrens zur Anlage an die Seitenwände (4, 26, 27) und/oder den Bodenbereich gelangen und mit diesem verbindbar sind.

8. Verfahren zur Herstellung eines Transportbehälters (1, 23) nach einem der Ansprüche 1 bis 7, insbesondere für feuchte oder durchnässende Stoffe, bestehend aus einem kastenförmigen, faltbaren Behälter (2),
**dadurch gekennzeichnet,**
**dass** der Behälter (2) anstelle eines Formstücks in eine Aufnahmeeinrichtung (24) einer Vakuumtiefziehvorrichtung eingespannt wird und der Bodenbereich sowie die Seitenwände (4, 26, 27) zumindest teilweise mit einer Folie (20) umhüllt werden, die durch Erzeugung eines Vakuums unterhalb des Behälters (2) zur Anlage an den Behälter (2) gelangt.

9. Verfahren zur Herstellung eines Transportbehälters (1, 23) nach einem der Ansprüche 1 bis 7, insbesondere für feuchte oder durchnässende Stoffe, bestehend aus einem kastenförmigen, faltbaren Behälter (2),
**gekennzeichnet durch,**
die Überstülpung eines gefalteten Behälters (2) mit einer Kunststoffschale (3) besehend aus einer Folie (20) und anschließender Entfaltung des Behälters (2) in der Kunststoffschale (3), wobei Mittel zur Befestigung der Kunststoffschale (3) vorhanden sind, die nach Entfaltung den Behälter (2) mit der Kunststoffschale (3) verbinden.

10. Verfahren nach einem der Ansprüche 8 bis 9,
**dadurch gekennzeichnet,**
**dass** die verwendete Folie (20) selbstklebend ausgebildet ist oder mit einer zweiten selbstklebenden Folie (20) auf der Innenseite beschichtet ist.

11. Verfahren nach einem der Ansprüche 8 bis 10,
**dadurch gekennzeichnet,**
**dass** als Folie (20) eine doppelte Polyethylenfolie verwendet wird, deren Lagen unterschiedliche Schmelzpunkte aufweisen, wobei der Behälter (2) ebenfalls mit einer Polyethylenfolie mit niedriger Schmelztemperatur versehen ist und durch Wärmeeinwirkung die beiden Polyethylenfolien mit niedrigem Schmelzpunkt einander zugewandt sind und miteinander verschweißt werden.

12. Verfahren nach einem der Ansprüche 8 bis 11,
**gekennzeichnet durch**
die Faltung des Transportbehälters, so dass die Seitenwände (4) im gefalteten Zustand eine Außenfaltung und der Boden (5) eine Innenfaltung aufweist.

## Claims

1. Carrying container (1, 23), in particular for damp or soaking wet materials, consisting of a box-shaped container (2), which can be collapsed flat by folding and consists at least in part of paperboard or cardboard, the folding extending into the bottom region and bottom parts lying on top of one another in the folded state, **characterised in that**, as its bottom (5), the container (2) has a foldable plastics shell (3) which is fastened externally on the side walls (4) of the container (2).

2. Carrying container according to claim 1, **characterised in that**, when folded, the side walls (4) are directed outwards and the bottom (5) is directed inwards.

3. Carrying container according to either container according to either claim 1 or claim 2, **characterised in that** the plastics shell (3) is pulled up over the height of the container (2) by more than 50%.

4. Carrying container according to any one of claims 1 to 3, **characterised in that** parts of the container (2) consisting of paperboard or cardboard are impregnated and/or additionally laminated with a film (20).

5. Carrying container according to any one of claims 1 to 4, **characterised in that** the plastics shell (3) is reinforced by further bottom parts made of paperboard or cardboard.

6. Carrying container according to any one of claims 1 to 5, **characterised in that** folded holding loops (6, 6') are arranged on the container (2) or **in that** a banderole (7) is placed round the carrying container (1, 23).

7. Carrying container according to any one of claims 1 to 6, **characterised in that** the plastics shell (2) consists of a double film which, in turn, consists of a polyethylene film and an adhesive film, or **in that** the plastics shell (2) consists of a double film made of two polyethylene films with different melting temperatures, which make contact with the side walls (4, 26, 27) and/or the bottom region and can be connected thereto during the vacuum forming process.

8. Method for producing a carrying container (1, 23) according to any one of claims 1 to 7, in particular for damp or soaking wet materials, consisting of a box-shaped foldable container (2), **characterised in that** the container (2) is fixed in a receiving device (24) of a vacuum forming machine, rather than a shaped part, and the bottom region and the side walls (4, 26, 27) are at least in part covered with a film (20) which makes contact with the container (2) due to the production of a vacuum below the container (2).

9. Method for producing a carrying container (1, 23) according to any one of claims 1 to 7, in particular for damp or soaking wet materials, consisting of a box-shaped foldable container (2), **characterised by** slipping a plastics shell (3) consisting of a film (20) over a folded container (2) and then unfolding the container (2) in the plastics shell (3), means for fastening the plastics shell (3) being provided, to connect the container (2) to the plastics shell (3) once it has been unfolded.

10. Method according to either claim 8 or claim 9, **characterised in that** the film (20) used is self-adhesive in construction or is coated with a second self-adhesive film (2) on the interior.

11. Method according to any one of claims 8 to 10, **characterised in that** the film (20) used is a double polyethylene film of which the layers have different melting points, the container (2) also being provided with a polyethylene film having a low melting temperature and the two polyethylene films with a low melting point facing one another and being welded together by the effect of heat.

12. Method according to any one of claims 8 to 11, **characterised by** the folding of the carrying container so that the side walls (4), when folded, have outward folding and the bottom (5) has inward folding.

## Revendications

1. Boîte (1, 23) de transport, notamment pour des substances humides ou imbibées, constituée d'une boîte (2) en forme de caisson, qui peut être assemblée à plat par pliage et qui est constituée au moins en partie de carton recouvert de papier ou de carton, le pliage s'étendant dans la partie de fond, et des parties de fond étant côte à côte à l'état plié.
**caractérisée**
**en ce que** la boîte (2) a comme fond (5) une coquille (3) pliable en matière plastique, qui est fixée à l'extérieur sur les parois (4) latérales de la boîte (2).

2. Boîte de transport suivant la revendication 1,
**caractérisée**
**en ce que** les parois (4) latérales sont tournées vers l'extérieur à l'état plié et le fond (5) est tourné vers l'intérieur.

3. Boîte de transport suivant l'une des revendications 1 à 2,
**caractérisée**
**en ce que** la coquille (3) en matière plastique est tirée vers le haut sur plus de 50% de la hauteur de la boîte (2) .

4. Boîte de transport suivant l'une des revendications 1 à 3,
**caractérisée**
**en ce que** les parties de la boîte(2) en carton recouvert de papier ou en carton sont imprégnées et/ou sont plaquées supplémentairement d'une feuille (20).

5. Boîte de transport suivant l'une des revendications 1 à 4,
**caractérisée**
**en ce que** la coquille (3) en matière plastique est renforcée par des parties de fond en papier recouvert de papier ou en carton.

6. Boîte de transport suivant l'une des revendications 1 à 5,
**caractérisée**
**en ce que** des boucles (6,6') pliées de maintien sont disposées sur la boîte (2) ou en ce qu'une banderole (7) est mise autour de la boîte (1, 23) de transport.

7. Boîte de transport suivant l'une des revendications 1 à 6, **caractérisée**
**en ce que** la coquille (2) en matière plastique est constituée d'une feuille double qui est constituée à son tour d'une feuille de polyéthylène et d'une feuille adhésive ou en ce que la coquille (2) en matière plastique est constituée d'une feuille double comprenant deux feuilles de polyéthylène ayant des points de fusion différents, et qui, pendant le procédé d'emboutissage profond sous vide,viennent en contact avec les parois (4,26,27) latérales et/ou avec la partie de fond et peuvent y être fixées.

8. Procédé de fabrication d'une boîte (1, 23) de transport suivant l'une des revendications 1 à 7, notamment pour des substances humides ou imbibées constituée d'une boîte (2) pliable en forme de caisson,
**caractérisé**
**en ce que** l'on bloque la boîte (2) au lieu d'une pièce moulée dans un dispositif (24) de réception d'un dispositif d'emboutissage profond sous vide et on enveloppe la partie de fond ainsi que les parois (4, 6, 27) latérales, au moins en partie, d'une feuille (20) qui, par production d'un vide sous la boîte (2), vient en contact avec la boîte (2).

9. Procédé de production d'une boîte (1,23) de transport suivant les revendications 1 à 7, notamment pour des substances humides ou imbibées constituée d'une boîte (2) pliable en forme de caisson
**caractérisé par**
le retroussement d'une boîte (2) pliée ayant une coquille (3) en matière plastique, constituée d'une feuille (20) et ensuite le dépliage de la boîte (2) dans la coquille (3) en matière plastique, dans lequel il est prévu des moyens de fixation de la coquille (3) en matière plastique qui, après le dépliage de la boîte (2) sont reliés à la coquille (3) en matière plastique.

10. Procédé de transport suivant l'une des revendications 8 à 9,
**caractérisé**
**en ce que** la feuille (20)utilisée est autocollante ou est revêtue sur la face intérieure d'une deuxième feuille (20) autocollante.

11. Procédé transport suivant l'une des revendications 8 à 10,
**caractérisé**
**en ce que** l'on utilise comme feuille (20) une feuille de polyéthylène doublée, dont les couches ont des points de fusion différents, la boîte (2) étant munie également d'une feuille de polyéthylène ayant un bas point de fusion et, par effet de la chaleur, les deux feuilles de polyéthylène ayant un bas point de fusion, étant tournées l'une vers l'autre et soudées l'une à l'autre.

12. Procédé de transport suivant l'une des revendications 8 à 11,
**caractérisé par**
le pliage de la boîte de transport, de sorte que les parois (4) latérales ont, à l'état plié, un pliage extérieur,et le fond (5), un pliage intérieur.
